# EUROPEAN PATENT SPECIFICATION

(11) **EP 2 529 527 B1**
(45) Date of publication and mention of the grant of the patent: **02.12.2015**
(21) Application number: 10703430.8
(22) Date of filing: 25.01.2010
(51) Int. Cl.: H04L 29/06

(54) **METHOD FOR CONTROLLING ACCESS TO RESOURCES**
VERFAHREN ZUR STEUERUNG DES ZUGRIFFS AUF RESSOURCEN
PROCÉDÉ POUR CONTRÔLER L'ACCÈS À DES RESSOURCES

(43) Date of publication of application: 05.12.2012
(73) Proprietor: Nokia Solutions and Networks Oy, 02610 Espoo (FI)
(72) Inventor: MARTON, Gabor, H-1124 Budapest (HU); BODI, Miklos, Tamas, H-3326 Ostoros (HU); FARKAS, Lorant, H-1112 Budapest (HU); GABOR, Adam, H-1117 Budapest (HU)
(74) Representative: Borgström, Markus
(86) International application number: PCT/EP2010/050753
(87) International publication number: WO 2011/088900

(56) References cited:
- EP-A2- 1 357 458
- WO-A1-02/077819
- US-A1- 2007 006 325
- US-A1- 2010 005 511
- HAMMER-LAHAV E ET AL: "The OAuth Core Protocol; draft-hammer-oauth-02.txt", 23 March 2009 (2009-03-23), THE OAUTH CORE PROTOCOL; DRAFT-HAMMER-OAUTH-02.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, XP015060627, page 20, line 3 - page 23, line 2 page 27, line 15 - page 28, line 6
- VRANCKEN Z ZELTSAN ALCATEL-LUCENT B: "Using OAuth for Recursive Delegation; draft-vrancken-oauth-redelegati on-00.txt", 1 September 2009 (2009-09-01), USING OAUTH FOR RECURSIVE DELEGATION; DRAFT-VRANCKEN-OAUTH-REDELEGATI ON-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, XP015064118, [retrieved on 2009-09-09] page 3, line 12 - page 5, line 11
- "OpenSocial restfull Protocol v0.8.1", [Online] 25 September 2008 (2008-09-25), 20080925, PAGE(S) 1 - 35, XP002584389, Retrieved from the Internet: URL:http://www.opensocial.org/Technical-Re sources/opensocial-spec-v081/re stful-protocol.html> [retrieved on 2010-05-27] page 9, line 20 - page 13, line 42

## Description

The present invention is directed to service access control.

In general, access to a service occurs by means of requests issued by a client. Service access control ensures that a service provider services only those requests that are granted to the client.

In Internet services, the requests typically access or modify resources (e.g. text, photos, videos, or any other type of data) or invoke some function. Without loss of generality, we can refer to resources here (where the term "resources" is intended to also encompass function invocations). The interface through which the requests are submitted is commonly called a Web API (Application Programming Interface), typically based on the HTTP protocol.

It is a typical pattern that a client (typically a user) owns certain resources at the service i.e. they are free to read, modify or delete the data or to invoke or modify a function; furthermore a client/user may grant other users or services access to their resources (e.g. in case of a social networking service, they allow other users to see their list of friends).

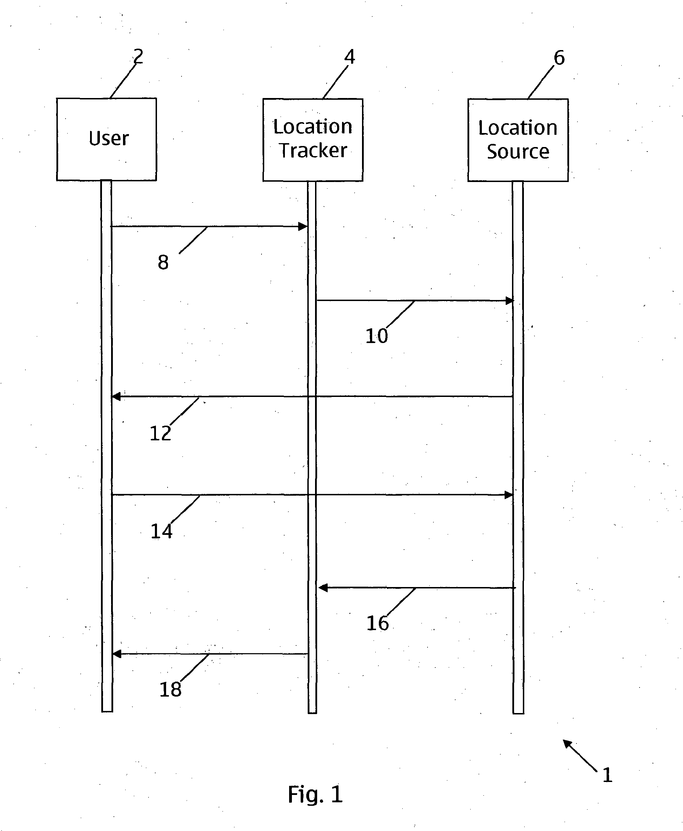

Figure 1 is a message sequence, indicated generally by the reference numeral 1, demonstrating an exemplary form of service access control. The message sequence 1 shows a sequence of messages between a user 2, a location tracker program 4 and a location source 6. The user 2 is using the location tracker program 4 to determine his own location. The location source 6 is a service provider that provides location data. By way of example, the location source 6 may provide raw location data, for example in the form of location co-ordinates, and the location tracker program 4 may present the location data to the user 2 in the form of a position on a map.

The message sequence 1 begins with the user 2 sending a message 8 to the location tracker program 4 requesting an indication of the user's current location. In response, the location tracker software 4 sends a message 10 to the location source requesting the current location of the user 2.

Since location data is potentially sensitive information, access to location data that is available to the location source 6 may be restricted. Accordingly, in response to the request 10, the location source may determine that it does not have permission to provide location data concerning the user 2 to the location tracker program 4. Thus, in response to the message, the location source 6 sends a message 12 to the user 2, asking the user whether or not the user grants the location tracker program 4 access to the requested location data. In response to the message 12, the user 2 sends a reply 14 to the location source indicating that location data can be provided to the location tracker program 4.

The message sequence 1 proceeds with the location source 6 sending a message 16 to the location tracker program 4 providing the requested location data and the location tracker program subsequently sending a message 18 to the user 2 providing the location data requested in the message 8.

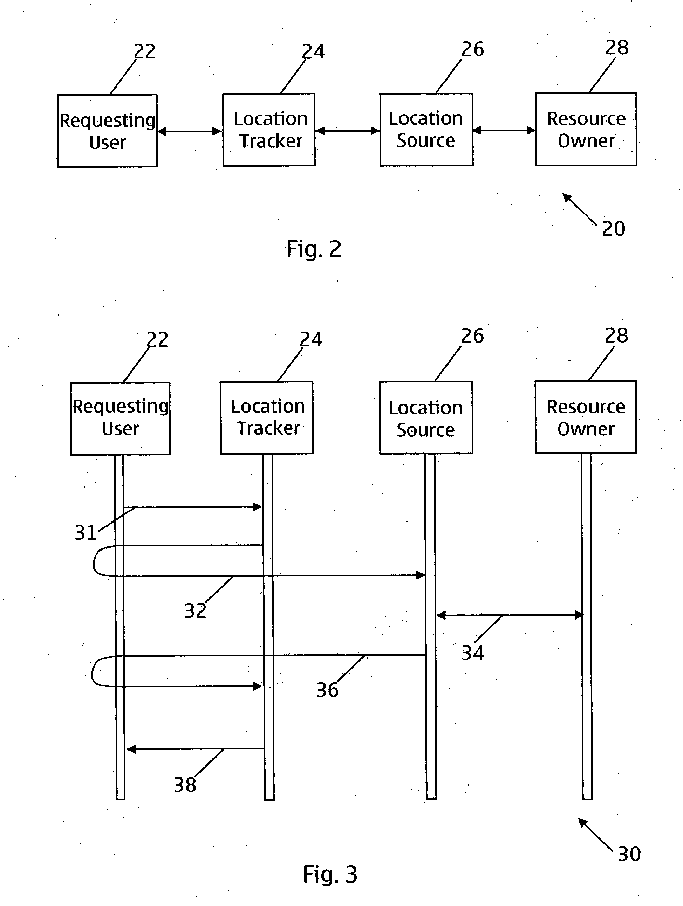

The message sequence 1 demonstrates a simple scenario where a user is seeking data concerning his own location. It is relatively simple to provide service access control in such a situation, since the user can readily be asked to provide the requested access to the location data. Figure 2 shows a more complicated situation where a different person requests access to the user's location data.

Figure 2 is a block diagram of a system, indicated generally by the reference numeral 20. The system 20 comprises a user 22, a location tracker program 24, a location source 26 and a resource owner 28. As in the exemplary system shown in Figure 1, the user 22 is requesting access to location data provided by the location source 26; however, in the exemplary system 20, the location data provided by the location source 26 is owned by the resource owner 28 and not the requesting user 22.

The user requesting access to a resource (the user 22 in the example of Figure 2) is typically referred to herein as either a "requesting user" or a "consumer user"; those terms are interchangeable. Similarly, the service being used by the requesting/consumer user (the location tracker program 24 in the example of Figure 2) is typically referred to herein as either a "requesting service" or a "consumer service"; again, those terms are interchangeable. The application in control of the resource being requested by the requesting/consumer user (the location source 26 in the example of Figure 2) is typically referred to as a service provider. Finally, the owner of the resource is typically referred to as a resource owner (such as the resource owner 28 in the example of Figure 2).

By way of example, consider the following scenario. Anikó (the requesting user 22) visits the location tracker program 24 to check where her boyfriend Botond is. Botond is the resource owner 28 and his location data is provided by the location source 26. Since location is sensitive information, Botond needs to give permission before location data can be provided to Anikó.

One simple approach to implement the scenario described above would be for Anikó to ask the location tracker program 24 for location data for Botond, and for the location tracker to subsequently ask for that data to be provided by the location source 26. In order to obtain Botond's permission, the location source could simply send a request to Botond for permission to provide the data to Anikó. In the event that Botond approves the request, the location data could be provided by the location source 26 to the location tracker program 24 and the location tracker program could present the data to Anikó. In essence, such an algorithm is the same as that described above with reference to Figure 1, except that the messages 12 and 14 are sent to/from Botond (as the resource owner) rather than to the requesting user.

The simple approach described above enables the resource owner 28 (Botond in the example above) to give permission for the data to be provided to the location tracker program 24. However, the arrangement does not readily enable the resource owner to give permission for the data to be provided on the condition that Anikó is the requesting user 22. Even if the request from the location tracker program 24 identifies Anikó as the requesting user, Botond is required to trust that this is in fact the case, thereby providing a potential security flaw.

Figure 3 shows a message sequence, indicated generally by the reference numeral 30, showing an alternative method for providing location data to Aniko.

The message sequence 30 begins with the requesting user (Anikó) sending a message 31 to the location tracker program 24 requesting the current location of her boyfriend Botond (the resource owner). In response to the message 31, the location tracker program 24 redirects Anikó to the location source 26 with the resource request (message 32). The location source 26 asks the resource owner 28 (Botond) for permission to provide the data to Anikó (message 34). Assuming that permission is given, the service provider redirects Anikó to the location tracker program 24 with the requested resource (message 36). The location data, suitably presented by the location tracker software 24 can therefore be provided to Anikó (message 38).

From the point of view of the service provider (the location source 26 in this example), the approach of the message sequence 30 seems to be the cleanest approach, since the location source only serves the requesting/consumer user 22, and is never in direct connection with the requesting/consumer service; in other words, disclosing the private resource to the location tracker program 24 remains the requesting/consumer user's (Anikó in the example above) own business. Furthermore, the resource owner (Botond in the example above) only has to give their consent to the access by the requesting/consumer user (and not the requesting/consumer service).

This approach, however, also has disadvantages: (1) the method is not optimal from performance point of view:
potentially big resource representations, such as multimedia files, all go via the consumer user; (2) the method is intrusive to the service provider, since the service provider must answer the resource request by a redirect so that the consumer user's browser returns to the consumer service; and (3) the method is also questionable from security point of view, since the consumer user does not notice an invisible redirect.

Accordingly, the prior art arrangements described above do not provide a solution by which a service provider (such as the location source 26) can securely authorize a consumer service (such as the location tracker program 24) to access a resource, based on the resources owner's consent, where this consent refers to the identity of both the requesting/consumer service and the requesting/consumer user.

OAuth is a specification for access delegation in the Internet. OAuth is described as "an open protocol to allow secure API authorization in a simple and standard method from desktop and web applications". OAuth is designed for scenarios where the consumer is a service (e.g. a user may grant a photo printing service access to their images at a photo storage service). When presenting the access token, the consumer is authenticated on the basis of a Consumer Key/Secret pair. However, standard OAuth is not suitable for use in the present invention, because: (1) it cannot be used in cases where the consumer is a person, because persons typically don't possess a Consumer Key/Secret pair specific to the service; (2) it cannot be used in cases where the user wants to grant the access to such a consumer service that performs the request in the name of another user and our user wants to limit the access to a specific user.

The present invention seeks to address at least some of the problems outlined above.

Detailed examples belonging to the relevant prior art can be found in the publication US2010/005511-A1 and also in E. Hammer-Lahav's article "The OAuth Core Protocol", which is an Internet Engineering Task Force note dated 23 March 2009.

In accordance with an aspect of the invention, there is provided a method comprising: issuing a resource request from an application to a service provider, the resource request requesting access to a resource at the service provider, wherein the resource request is issued by the application in the name of a requesting user; and providing credentials to the service provider such that an owner of the resource is able to grant consent to the resource request, wherein the consent is dependent on both the application and the requesting user (typically the identity of the application and the identity of the requesting user).

In accordance with an aspect of the invention, there is provided an application (such as a requesting service or a consumer service) comprising: a first output for issuing a resource request to a service provider, the resource request requesting access to a resource at the service provider, wherein the resource request is issued by the application in the name of a requesting user; and a second output for providing credentials to the service provider such that an owner of the resource is able to grant consent to the resource request, wherein the consent is dependent on both the application and the requesting user (typically the identity of the application and the identity of the requesting user).

Accordingly, the present invention enables a service provider to authorise an application to access a resource, based on

the resource owner's consent, where this consent refers to both the application and the requesting user.

A request may be received at the application from a user requesting access to a resource at a service provider. The resource request of the present invention may be issued in response to a request from the user.

In some forms of the invention, a first access request is sent from the application to the service provider, the first access request requesting access to the resource at the service provider. In one form of the invention, no credential information is included in the first access request and so that access request is refused by the service provider. In response to the refusal, suitable credential information may be sought, as set out below.

The invention further comprises sending a first authorisation request (typically sent from the application to the service provider) seeking permission from the owner of the resource for the application to access the resource. The first authorisation request may be sent in response to the first access request being denied. The first authorisation request may lead to the service provider asking the resource owner (or perhaps an IDM or some other entity acting on behalf of the resource owner) for permission for access to the resource to be granted.

A conditional authorisation is received (typically from the service provider) granting the application permission to access the said resource on condition that the access request is made in the name of a user defined in the conditional authorisation. The conditional authorisation may be received in response to the first authorisation request described above. In some forms of the invention, the conditional authorisation is issued by the owner of the resource. In other forms of the invention, the conditional authorisation is issued on behalf of the owner of the resource (e.g. by an IDM acting on behalf of the user). The conditional authorisation may be provided in the form of a token.

In many forms of the invention, the resource request referred to above includes details of the conditional authorisation.

The invention further comprises sending a second access request from the application to the service provider requesting access to the resource, the second access request including details of the conditional authorisation. The second access request includes the conditional authorisation but may omit information identifying the requesting user; the second access request may be refused on this basis.

The invention may further comprise sending a second authorisation request seeking permission from the user requesting access to the resource for the application to request access to the resource in the name of the user requesting access to a resource. The second authorisation request may be sent in response to the second access request being denied.

The invention may comprise receiving user authorisation (e.g. in the form of a token) to request access to the service provider in the name of the specified user. The resource request may include details of said user authorisation to request access to the service provider in the name of the specified user.

In accordance with an aspect of the invention, there is provided a method comprising: receiving a resource request from an application at a service provider, the resource request requesting access to a resource at the service provider, wherein the resource request is issued by the application in the name of a requesting user; and obtaining conditional authorisation to the resource request from an owner of the resource, wherein the conditional authorisation is dependent on the application and the requesting user (typically the identity of the application and the identity of the requesting user).

In accordance with a further aspect of the invention, there is provided an apparatus (such as a service provider) comprising: a first input for receiving a resource request from an application at a service provider, the resource request requesting access to a resource at the service provider, wherein the resource request is issued by the application in the name of a requesting user; and means for obtaining conditional authorisation to the resource request from an owner of the resource, wherein the conditional authorisation is dependent on the application and the requesting user (typically the identity of the application and the identity of the requesting user).

The invention may further comprise receiving a request from an application to access the resource.

The invention may further comprise receiving a first access request from the application at the service provider, the first access request requesting access to the service provider. The first access request may omit the required credential information and so may be refused. In response to the refusal, credential information may be sought, as set out below.

The invention further comprises receiving (at the service provider) a first authorisation request seeking permission from an owner of the resource for the application to access the resource. The conditional consent may be obtained in response to the first authorisation request. The first authorisation request may be issued in response to the first access request being denied. The conditional authorisation may be forwarded to the application seeking access to the resource.

The invention further comprises receiving a second access request from the application at the service provider, wherein the second access request requests access to the resource and includes details of the conditional authorisation.

Typically, the second access request omits user authorisation and may therefore also be refused.

The invention may further comprise receiving a second authorisation request seeking user authorisation for the application to request access to the resource in the name of the user requesting access to the resource. The second authorisation request may be issued in response to the second access request being denied.

In some forms of the invention, the resource request includes details of the conditional authorisation.

The conditional authorisation may be issued by the owner of the resource. The conditional authorisation may be issued on behalf of the owner of the resource (e.g. by an IDM acting on behalf of the owner of the resource).

In accordance with an aspect of the invention, there is provided a method comprising: receiving, at an application, a request from a user requesting access to a resource at a service provider; sending a first authorisation request seeking permission from an owner of the resource for the application to access the resource; receiving (typically at the application) a conditional authorisation (possibly in the form of a token) granting the application permission to access the said resource on condition that the access request is made in the name of a user defined in the conditional authorisation; sending a second authorisation request seeking permission from the user requesting access to the resource for the application to request access to the resource in the name of the user requesting access to a resource; receiving (typically at the application) user authorisation (possibly in the form of a token) to request access to the service provider (i.e. to the resource) in the name of the specified user (the user authorisation is typically sent from the service provider to the application, but the user authorisation is typically obtained by the service provider from the user, or from an entity (such as an IDM) acting for the user); and sending a third access request to the service provider requesting access to the service provider, the third access request including details of the user authorisation.

In accordance with a further aspect of the invention, there is also provided an application (e.g. a requesting/consumer service) comprising: a first input for receiving a request from a user requesting access to a resource at a service provider; a first output for sending a first authorisation request seeking permission from an owner of the resource for the application to access the resource; a second input for receiving a conditional authorisation (possibly in the form of a token) granting the application permission to access the said resource on condition that the access request is made in the name of a user defined in the conditional authorisation; a second output for sending a second authorisation request seeking permission from the user requesting access to the resource for the application to request access to the resource in the name of the user requesting access to a resource; a third input for receiving user authorisation (possibly in the form of a token) to request access to the service provider (i.e. to the resource) in the name of the specified user (the user authorisation is typically sent from the service provider to the application, but the user authorisation is typically obtained by the service provider from the user, or from an entity (such as an IDM) acting for the user); and a third output for sending a third access request to the service provider requesting access to the service provider, the third access request including details of the user authorisation. The application may further comprise a fourth output for sending a first access request from the application to the service provider requesting access to the service provider. The application may further comprise a fourth output for sending a second access request from the application to the service provider requesting access to the resource, the second access request including details of the conditional authorisation. Of course, one or more of said inputs may be provided using the same physical input and one or more of said outputs may be provided using the same physical output. Similarly, one or more of said inputs and outputs may share a physical input/output device.

In some forms of the invention a first access request is sent from the application to the service provider requesting access to the service provider. The first authorisation request may be sent in response to the first access request being denied (e.g. denied by the service provider).

In some forms of the invention, a second access request is sent from the application to the service provider requesting access to the resource, the second access request including details of the conditional authorisation. The second authorisation request may be sent in response to the second access request being denied (e.g. denied by the service provider).

The third access request may include details of the conditional authorisation. Accordingly, the third access request may be sent after both the first and second access requests have been sent (and refused).

The conditional authorisation may be received at the application from the service provider.

The conditional authorisation may be issued by the owner of the resource (e.g. by the owner of the resource indicating that authorisation should be granted). Alternatively, the conditional authorisation may be issued on behalf of the owner of the resource (e.g. by an IDM of the resource owner). The IDM may or may not interact with the owner of the resource when issuing the conditional authorisation. Accordingly, a conditional authorisation may be issued on the basis of security policies defined by the user, without the user needing to take an active part in each issuance of a conditional authorisation.

In accordance with an aspect of the invention, there is provided a method comprising: receiving (typically at a service provider) a request from an application to access a resource; receiving (typically at the service provider) a first authorisation request seeking permission from an owner of the resource for the application to access the resource; obtaining a conditional authorisation (possibly in the form of a token) granting the application permission to access the service provider on condition that the access request is made in the name of a specified user; forwarding the conditional authorisation to the application seeking access to the resource; receiving (typically at the service provider) a second authorisation request seeking user authorisation for the application to request access to the resource in the name of the user requesting access to the resource; and receiving a third access request requesting access to the service provider, the third access request including details of the authorisation received from the requesting user.

In accordance with a further aspect of the invention, there is provided an application (such as a service provider) comprising: a first input for receiving a request from an application to access a resource; a second input for receiving a first authorisation request seeking permission from an owner of the resource for the application to access the resource; means for obtaining a conditional authorisation (possibly in the form of a token) granting the application permission to access the service provider on condition that the access request is made in the name of a specified user; a first output for forwarding the conditional authorisation to the application seeking access to the resource; a third input for receiving a second authorisation request seeking user authorisation for the application to request access to the resource in the name of the user requesting access to the resource; and a fourth input for receiving a third access request requesting access to the service provider, the third access request including details of the authorisation received from the requesting user. Of course, one or more of said inputs may be provided using the same physical input and one or more of said outputs may be provided using the same physical output. Similarly, one or more of said inputs and outputs may share a physical input/output device.

The first authorisation request may be sent in response to the first access request being denied (e.g. by the service provider).

The third access request may include details of the conditional authorisation.

The conditional authorisation may be received at the application from the service provider.

The conditional authorisation may be issued by the owner of the resource (e.g. by the owner of the resource indicating that authorisation should be granted). In an alternative form of the invention, the conditional authorisation may be issued on behalf of the owner of the resource (e.g. by an IDM of the resource owner).

The present invention provides a computer program comprising: code (or some other means) for issuing a resource request from an application to a service provider, the resource request requesting access to a resource at the service provider, wherein the resource request is issued by the application in the name of a requesting user; and code (or some other means) for providing credentials to the service provider such that an owner of the resource is able to grant consent to the resource request, wherein the consent is dependent on both the application and the requesting user (typically the identity of the application and the identity of the requesting user). The computer program may be a computer program product comprising a computer-readable medium bearing computer program code embodied therein for use with a computer.

Further the computer program comprises: code (or some other means) for receiving a resource request from an application at a service provider, the resource request requesting access to a resource at the service provider, wherein the resource request is issued by the application in the name of a requesting user; and code (or some other means) for obtaining conditional authorisation to the resource request from an owner of the resource, wherein the conditional authorisation is dependent on the application and the requesting user (typically the identity of the application and the identity of the requesting user). The computer program may be a computer program product comprising a computer-readable medium bearing computer program code embodied therein for use with a computer.

The present invention also provides a computer program comprising: code (or some other means) for receiving a request from a user requesting access to a resource at a service provider; code (or some other means) for sending a first authorisation request seeking permission from an owner of the resource for the application to access the resource; code (or some other means) for receiving a conditional authorisation (possibly in the form of a token) granting the application permission to access the said resource on condition that the access request is made in the name of a user defined in the conditional authorisation; code (or some other means) sending a second authorisation request seeking permission from the user requesting access to the resource for the application to request access to the resource in the name of the user requesting access to a resource; code (or some other means) for receiving (at the application) user authorisation (possibly in the form of a token) to request access to the service provider (i.e. to the resource) in the name of the specified user (the user authorisation is typically sent from the service provider to the application, but the user authorisation is typically obtained by the service provider from the user, or from an entity (such as an IDM) acting for the user); and code (or some other means) for sending a third access request to the service provider requesting access to the service provider, the third access request including details of the user authorisation. The computer program may be a computer program product comprising a computer-readable medium bearing computer program code embodied therein for use with a computer.

The present invention yet further provides a computer program comprising: code (or some other means) for receiving (at a service provider) a request from an application to access a resource; code (or some other means) for receiving (at the service provider) a first authorisation request seeking permission from an owner of the resource for the application to access the resource; code (or some other means) for obtaining a conditional authorisation (possibly in the form of a token) granting the application permission to access the service provider on condition that the access request is made in the name of a specified user; code (or some other means) for forwarding the conditional authorisation to the application seeking access to the resource; code (or some other means) for receiving (at the service provider) a second authorisation request seeking user authorisation for the application to request access to the resource in the name of the user requesting access to the resource; and code (or some other means) for receiving a third access request requesting access to the service provider, the third access request including details of the authorisation received from the requesting user. The computer program may be a computer program product comprising a computer-readable medium bearing computer program code embodied therein for use with a computer.

Exemplary embodiments of the invention are described below, by way of example only, with reference to the following numbered drawings.
Figure 1 shows an exemplary service access algorithm;
Figure 2 is a block diagram of a system in which the present invention may be used;
Figure 3 shows an exemplary service access algorithm;
Figure 4 is a block diagram of a system in which the present invention may be used;
Figure 5 is a block diagram showing an algorithm in accordance with an aspect of the present invention;
Figure 6 is a flow chart showing an algorithm in accordance with an aspect of the present invention;
Figure 7 shows a message sequence in accordance with an aspect of the present invention;
Figure 8 shows a variant of an aspect of the message sequence of Figure 7;
Figure 9 shows a variant of an aspect of the message sequence of Figure 7; and
Figure 10 shows a variant of an aspect of the message sequence of Figure 7.

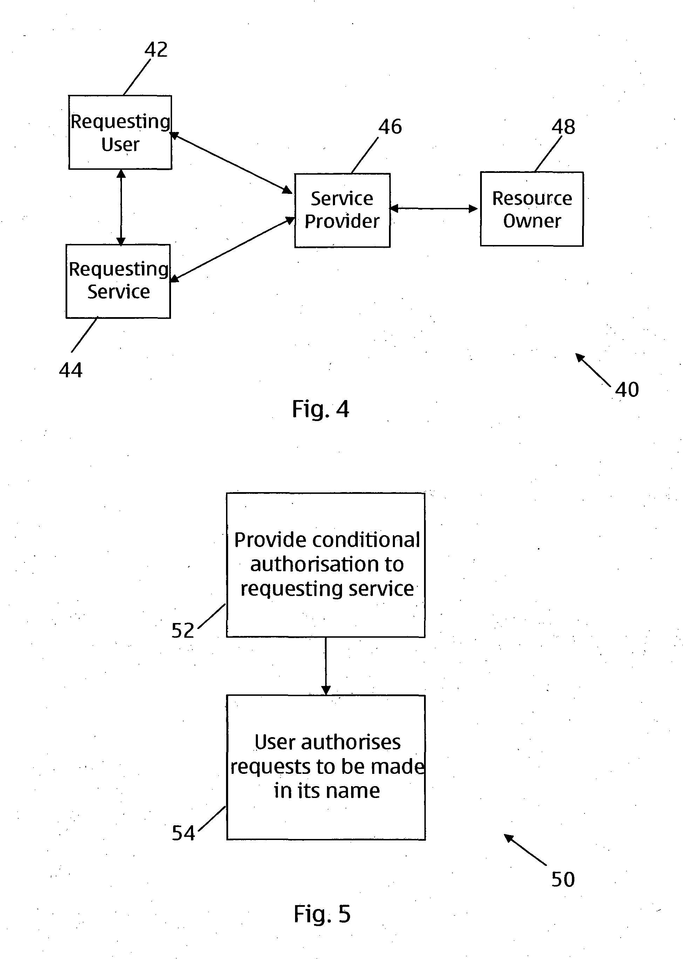

Figure 4 is a block diagram of a system, indicated generally by the reference numeral 40, in which the present invention may be used. The system 40 comprises a requesting user 42, a requesting service 44, a service provider 46 and a resource owner 48. As shown in Figure 4, the requesting user 42 is in two-way communication with both the requesting service 44 and the service provider 46, and the service provider is also in two-way communication with the requesting service 44 and the resource owner 48. The system 40 is therefore similar to the system 20 described above with reference to Figure 2.

Figure 5 is a block diagram showing an algorithm, indicated generally by the reference numeral 50, that enables the service provider 46 of the system 40 to authorize the requesting service 44 to access a resource at the service provider, based on the consent of the resource owner 48, where this consent refers to the identity of both the requesting user 42 and the requesting service 44.

The algorithm 50 includes a first step 52, where the resource owner 48 authorizes the requesting service to access a resource, provided that the access is made in the name of a certain requesting/consumer user.

The algorithm 50 includes a second step 54, where the requesting/consumer user authorizes the requesting/consumer service to access the resource in their name i.e. to act in their name towards the service provider for accessing the resource.

Thus, the algorithm 50 separates the problem outlined above (that of providing authentication on the basis of the identity of both a requesting user and a requesting service) into two separate steps. The steps can be implemented in a number of ways, as described in detail below.

The second problem (step 54) is an "OAuth-type" problem, where the to-be-authorized "resource" is the act of access, and the consumer user plays the role of the "resource owner". The first problem (step 52) is a bit more complicated, because here the resource owner (the real resource owner) conditionally authorizes the consumer service to access to resource: in fact the condition is that the second problem (step 54) is solved.

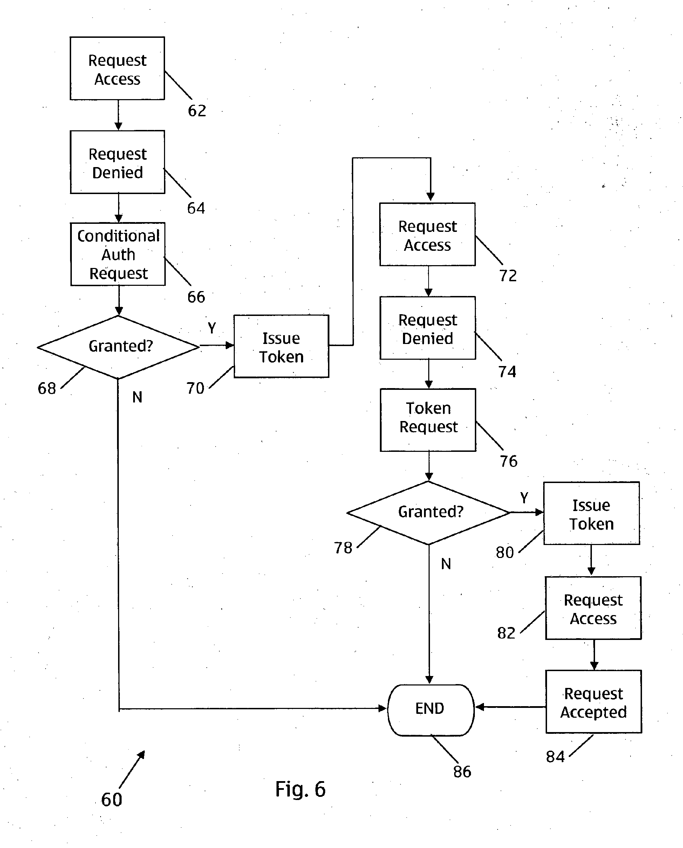

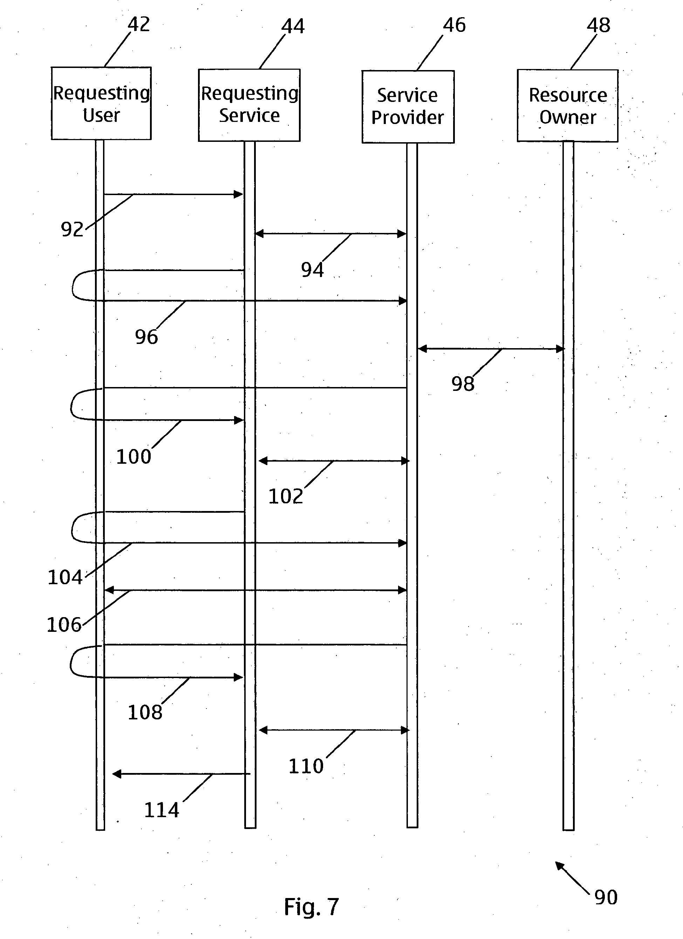

Figure 6 is a flow chart showing an algorithm, indicated generally by the reference numeral 60, in accordance with an aspect of the present invention. Figure 7 is a message sequence, indicated generally by the reference numeral 90, demonstrating an exemplary implementation of the algorithm 60. The message sequence 90 shows messages being transferred between the requesting user 42, the requesting service 44, the service provider 46 and the resource owner 48 in accordance with an embodiment of the present invention.

The algorithm 60 starts at step 62, where the requesting service 44 sends a request to access the required resources at the service provider 46. At this stage, the resource owner 48 has not given approval for the resources to be accessed and so the request is refused (step 64). The steps are implemented in the message sequence 90 by the requesting user 42 sending a message 92 to the requesting service 44 requesting access to the resources at the service provider 46. A request to access the resource is sent from the requesting service 44 to the service provider 46 and, since the required permissions are not included in the request, that request is denied (messages 94).

In response to the access request being refused, the requesting service 44 seeks the required access permissions.

The first step is to obtain the conditional approval of the resource owner 48. In order to do this, the requesting service 44 applies for an access token from the service provider (step 66). This step is implemented by the requesting service redirecting the requesting user's browser to the service provider, such that the requesting user 42 submits an access token request to the service provider (message 96).

In order to determine whether or not the requested access token should be provided to the requesting service, the service provider 66 asks the resource owner 48 for consent (step 68). The step 68 implements the step 52 of the algorithm 50 described above. Thus, the step 68 determines whether the resource owner 48 authorizes the requesting service to access a resource, provided that the access is made in the name of a certain consumer user.

If the resource owner 48 does not give the requested authorization to the requesting service at step 68, then the algorithm terminates at step 86. If the resources owner 48 does give the requested authorization, then the algorithm proceeds to step 70 where the requested token is issued. Thus, at step 70, the service provider returns the access token by means of redirecting the requesting user's browser to the requesting service. Let T_{U} denote this access token; this token encapsulates the resource owner's conditional consent.

The sending of the authorization (consent) request from the service provider 46 to the resource owner 48 and the sending of the response (access/deny) back to the service provider is shown as messages 98 in the message sequence 90. The access token T_{U} is then returned to the requesting service by means of redirecting the requesting user's browser to the requesting service (message 100).

Note that the request (message 96) for the token T_{U} by the requesting service 44 and the response (message 100) containing the token T_{U} from the service provider 46 can alternatively be implemented as direct messages between the requesting service 44 and the service provider 46, as opposed to the redirect-based communication depicted in the message sequence 90.

Next, at step 72 of the algorithm 60, the requesting service attempts to access the resource owner's private resource at the service provider 46 for the second time. This time the access request includes the access token T_{U}.

In response to the access request, the service provider denies access (step 74). The reason is that the access token T_{U} authorizes the access with the condition that the request is being made in the name of a certain requesting user. The request 72 does not indicate the requesting user and so the request must be refused. The second access request and the subsequent denial of that request are shown in Figure 7 by the messages 102.

The refusal at step 74 leads, at step 76, to the requesting service to seek a second access token (denoted by T_{C}) which encapsulates the requesting user's consent for the consumer service to access the resource in the name of the requesting user i.e. to act in their name towards the service provider for accessing the resource (see the step 54 described above). Again, the request for the access token is sent by redirecting the requesting user's browser to the service provider (message 104), thereby providing the access token request to the service provider.

At step 78 of the algorithm 60, the service provider determines whether or not the access token should be granted. As shown in Figure 7, this is implemented by sending a message to the requesting user 42 seeking the requesting user's permission for the requesting service to issue requests in the name of the requesting user. The message sent to the requesting user 42, and the reply to that message, are indicated in the message sequence 90 by the messages 106.

If consent is not given by the requesting user, then the algorithm 60 terminates at step 86; otherwise, the algorithm 60 moves to step 80.

At step 80, the service provider 46 returns an access token (referred to as T_{C}). This is implemented by means of redirecting the requesting user's browser to the requesting service (see message 108). The token T_{C} encapsulates the requesting user's consent (thereby implementing step 54 of the algorithm 50).

As a consequence of the redirect response received in the previous step, the requesting user's browser passes the access token T_{C} to the requesting service 44.

Note that the request (message 104) for the token T_{C} by the requesting service 44 and the response (message 108) containing the token T_{C} from the service provider 46 can alternatively be implemented as direct messages between the requesting service 44 and the service provider 46, as opposed to the redirect-based communication depicted in the message sequence 90.

Next, the requesting service issues a third access request to the service provider at step 82 of the algorithm 60. That request includes both of the access tokens described above and so the request is granted at step 84. The steps 82 and 84 are implemented in the message sequence by the messages 110.

The requesting service 44 now completes the task originally requested in the message 92 and the algorithm 60 terminates at step 86 (message 114 of Figure 7).

The algorithm 60 and the message sequence 90 show an exemplary embodiment of the present invention. There are, however, many possible variants of the invention, some of which are discussed below.

The messages 98 of the message sequence 90 shows the resource owner 48 being contacted directly by the service provider 46 to provide the requested conditional authorisation for the requesting service 44 to access the requested resource. This is not essential to all embodiments of the invention.

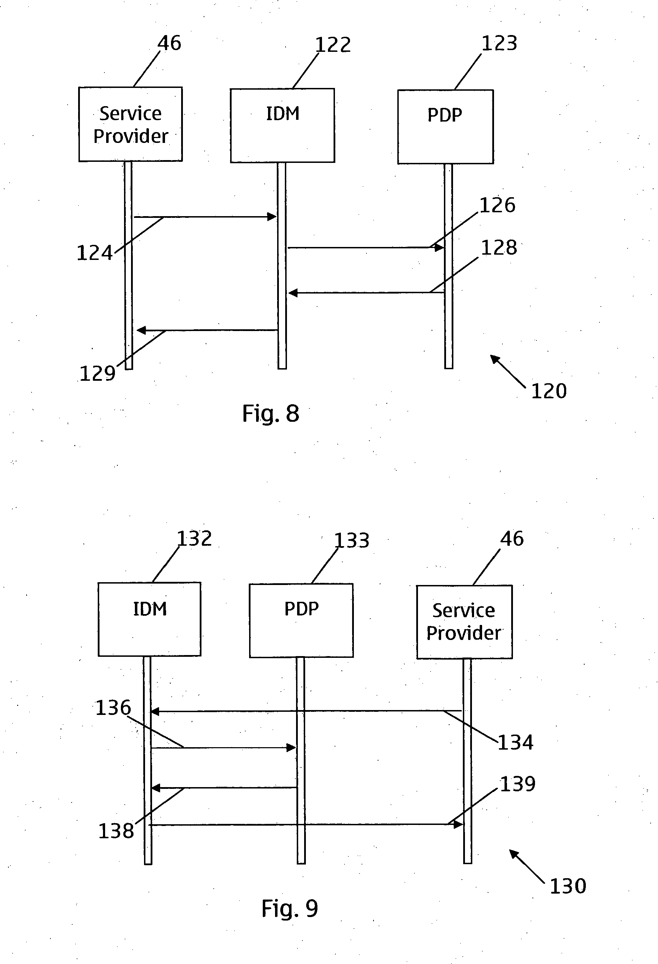

Figure 8 shows a message sequence, indicated generally by the reference numeral 120, that can be used instead of the messages 98. The message sequence 120 begins after the service provider 46 receives the message 96. On receipt of the message 96, the service provider 46 sends a message 124 to an identity management system (IDM) 122 associated with the resource owner 48. The IDM typically asks a Policy Decision Point (PDP) 123 to decide whether the requested conditional authorization should be granted (message 126).

The PDP 123 evaluates the resource owner's privacy policies to determine whether they allow the resource to be accessed by the requesting service in the name of the requesting user, and returns the decision to the IDM (message 128). The IDM 122 then responds to the service provider accordingly (message 129). The resource owner 48 may, in some embodiments, be involved in the decision in an interactive way, although this is not shown in the figure. Furthermore, the PDP 123 may be omitted so that the IDM 122 makes the decision and provides the response 129 to the service provider (i.e. the messages 126 and 128 are omitted).

Once the service provider has received the message 129 indicating that conditional authorization is granted, then message sequence 90 continues at message 100, as described above.

In a similar manner, the messages 106 of the message sequence 90 shows the requesting user 42 being contacted directly by the service provider 46 to provide the requested indication that the requesting service can request access to the requested resource at the service provider 46 in the name of the requesting user. This is not essential to all embodiments of the invention.

Figure 9 shows a message sequence, indicated generally by the reference numeral 130, that can be used instead of the messages 106. The message sequence starts after the message 104 has been received at the service provider.

In the message sequence 130, the service provider 46 sends a message 134 to an identity management system (IDM) 132 associated with the requesting user. IDM typically sends a message a Policy Decision Point (PDP) 133 asking the PDP to decide whether the desired resource may be requested in the user's name (message 136). The PDP 133 evaluates the requesting user's privacy policies to determine whether they allow the requesting service to act in the name of the requesting user towards the service provider, and returns the decision to the IDM (message 138). The requesting user 42 may, in some embodiments, be involved in the decision in an interactive way, although this possibility is not shown in the message sequence 130. Furthermore, the PDP 133 may be omitted so that the IDM 132 makes the decision and provides the response 139 to the service provider (i.e. the messages 136 and 138 are omitted).

The IDM 132 then responds to the service provider (message 139) and the message sequence 90 continues with the message 108.

A potential problem with the algorithm 60 described above is that a malicious requesting service 44 may abuse the requesting user's consent to request access to a resource in the requesting user's name by accessing the protected resource at a different time than when the requesting user intends.

This problem may be at least partially addressed by ensuring that the requesting user's consent for the requesting service 44 to make requests in the requesting user's name is propagated to the service provider 46 only if the requesting user has (or probably has) a session ongoing with the requesting service.

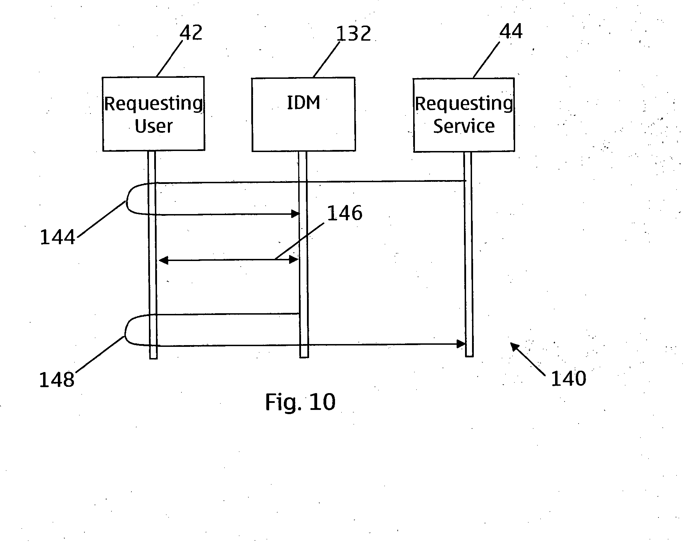

Figure 10 shows a message sequence, indicated generally by the reference numeral 10. The message sequence makes use of the identity management system 132 described above with reference to Figure 9. The IDM 132 remembers whether it had previously authenticated the requesting user. If so, the IDM concludes that there the requesting user does indeed have an ongoing session with the requesting service. Of course, there may be a time limit, beyond which the session is assumed to have expired.

The message sequence 140 takes place after the message 92 has been sent from the requesting user 42 to the requesting service 44. The requesting service sends a message 144 to the IDM 132 (typically using redirection via the requesting user 42). The IDM authenticates the requesting user and a suitable reply 148 is sent to the requesting service 44 (again, typically using redirection via the requesting user 42). Since the IDM has authenticated the user at this stage in the procedure, the IDM can determine later (when receiving the consent request 134, as described above with reference to Figure 9) whether the requesting user is likely to have an active session with the requesting service and can therefore determine whether a request received from a requesting service is likely to have been issued by the requesting user.

The OAuth protocol can be utilized in the implementation of the present invention, although this is by no means essential to the present invention. The OAuth protocol specification allows a service provider to associate any meaning and content (e.g. by means of an internal database at the service provider) with the OAuth tokens. Both of the tokens used in the present invention (T_{U} and T_{C}) can be exchanged by means of the OAuth protocol. In the case of the token T_{U}, the protocol might have to be extended: when the consumer service requests the access token T_{U} (step 66 of the algorithm 60), then in addition to the parameters specified by OAuth, the consumer/requesting user's identity should also be included in the request, e.g. in a newly introduced (optional) parameter oauth_consumer_user.

The basic message sequence described above illustrates a "first-time access" case, where the requesting service has no access tokens cached. In fact, both access tokens (T_{U} and T_{C}) may be long-live tokens and hence cached by the requesting service, although it is anticipated that this practice may only applied to T_{U} (such that the token T_{C} should always be fresh).

If the requesting service caches the access token T_{U}, then steps 62 to 70 of the algorithm 60 (and messages 94 to 100 of the message sequence 90) can be omitted, and the requesting service can immediately submit the cached token (step 72 of the algorithm 60).

The arrangement described above with reference to Figure 2 is one of many examples where a requesting user might use a consumer service to request a resource from a service provider, wherein that resource is owned or controlled by a different user. The principles of the present invention could be applied to many other use cases.

For example, the requesting user may be a child and the requesting service may be a web shop, such as an internet site selling music for downloading. The service provider may be a mobile wallet, the resource may be funds stored in that wallet and the resource owner may be a parent of the child. The parent may be able to authorize a specific internet shop to access the resources (i.e. debit funds from the mobile wallet), on the condition that the initial request comes from the child.

In a further example, the resource owner is a user and the requesting user is a friend of a user. The requesting service is a bank portal and the service provider is an attribute store (i.e. an application that stores a user's attribute information, including bank account details). The resource owner (the user) can give the service provider (the attribute store) permission to give the user's bank account details to the bank portal (the requesting service) on the condition that the requesting user is the user's friend.

The embodiments of the invention described above are illustrative rather than restrictive. It will be apparent to those skilled in the art that the above devices and methods may incorporate a number of modifications without departing from the general scope of the invention. It is intended to include all such modifications within the scope of the invention insofar defined by the appended claims.

## Claims

1. A method comprising:
issuing a resource request from an application to a service provider (46), the resource request requesting access to a resource at the service provider, wherein the resource request is issued by the application in the name of a requesting user (42); and
providing credentials to the service provider (46) such that an owner of the resource (48) is able to grant consent to the resource request, wherein the consent is dependent on both the application and the requesting user (42):
sending a first authorisation request seeking permission from the owner of the resource (48) for the application to access the resource I, the method **characterized by**:
receiving a conditional authorisation granting the application permission to access the said resource on condition that the access request is made in the name of a user (42) defined in the conditional authorization, and
sending a second access request from the application to the service provider requesting access to the resource, the second access request including details of the conditional authorisation.

2. A method as claimed in claim 1, further comprising sending a first access request from the application to the service provider (46), the first access request requesting access to the resource at the service provider (46).

3. A method as claimed in any preceding claim, further comprising sending a second authorisation request seeking permission from the user (42) requesting access to the resource for the application to request access to the resource in the name of the user requesting (42) access to a resource.

4. A method as claimed in claim 3, further comprising receiving user authorisation to request access to the service provider (46) in the name of the requesting user (42).

5. A method as claimed in claim 3, wherein the resource request includes details of said user authorisation to request access to the service provider (46) in the name of the requesting user (46).

6. A method comprising:
receiving a resource request from an application at a service provider (46), the resource request requesting access to a resource at the service provider (46), wherein the resource request is issued by the application in the name of a requesting user (42);
receiving a first authorisation -request seeking permission from an owner of the resource (48) for the application to access the resource, the method **characterized by**:
obtaining conditional authorisation to the resource request from an owner of the resource (48), wherein the conditional authorisation is dependent on the application and the requesting user (42), and
receiving a second access request from the application at the service provider (46), wherein the second access request requests access to the resource and includes details of the conditional authorisation.

7. A method as claimed in claim 6, further comprising receiving a first access request from the application at the service provider (46), the first access request requesting access to the service provider (46).

8. A method as claimed in any one of claims 6 to 7, further comprising receiving a second authorisation request seeking user authorisation for the application to request access to the resource in the name of the user (42) requesting access to the resource.

9. An application comprising:
a first output for issuing a resource request to a service provider (46), the resource request requesting access to a resource at the service provider (46), wherein the resource request is issued by the application in the name of a requesting user (42); and
a second output for providing credentials to the service provider such that an owner of the resource (48) is able to grant consent to the resource request, wherein the consent is dependent on both the application and the requesting user (42).
means for sending a first authorisation request seeking permission from the owner of the resource (48) for the application to access the resource, the application being **characterized by**
means for receiving a conditional authorisation granting the application permission to access the said resource on condition that the access request is made in the name of a user (42) defined in the conditional authorization, and
means for sending a second access request from the application to the service provider (42) requesting access to the resource, the second access request including details of the conditional authorisation.

10. An application comprising:
a first input for receiving a resource request from an application at a service provider (46), the resource request requesting access to a resource at the service provider (46), wherein the resource request is issued by the application in the name of a requesting user (42);
means for receiving a first authorisation request seeking permission from an owner of the resource (48) for the application to access the resource, the application being **characterized by**:
means for obtaining conditional authorisation to the resource request from an owner of the resource (48), wherein the conditional authorisation is dependent on the application and the requesting user (42), and
means for receiving a second access request from the application at the service provider (46), wherein the second access request requests access to the resource and includes details of the conditional authorisation.

11. A computer program product comprising:
means for issuing a resource request from an application to a service provider (46), the resource request requesting access to a resource at the service provider (46), wherein the resource request is issued by the application in the name of a requesting user (42); and
means for providing credentials to the service provider (46) such that an owner of the resource (48) is able to grant consent to the resource request, wherein the consent is dependent on both the application and the requesting user (42),
means for sending a first authorisation request seeking permission from the owner of the resource (48) for the application to access the resource, the computer program product being **characterized by**:
means for receiving a conditional authorisation granting the application permission to access the said resource on condition that the access request is made in the name of a user (42) defined in the conditional authorization, and
means for sending a second access request from the application to the service provider (46) requesting access to the resource, the second access request including details of the conditional authorisation.

12. A computer program product comprising:
means for receiving a resource request from an application at a service provider (46), the resource request requesting access to a resource at the service provider (46), wherein the resource request is issued by the application in the name of a requesting user (42);
means for receiving a first authorisation request seeking permission from an owner of the resource (48) for the application to access the resource, the computer program product being **characterized by**:
means for obtaining conditional authorisation to the resource request from an owner of the resource (48), wherein the conditional authorisation is dependent on the application and the requesting user (42) and
means for receiving a second access request from the application at the service provider (46), wherein the second access request requests access to the resource and includes details of the conditional authorisation.

## Patentansprüche

1. Verfahren, umfassend:
Ausgeben einer Ressourcenanforderung von einer Anwendung an einen Diensteanbieter (46), wobei die Ressourcenanforderung Zugriff auf eine Ressource beim Diensteanbieter anfordert, wobei die Ressourcenanforderung durch die Anwendung im Namen eines anfordernden Benutzers (42) ausgegeben wird; und
Bereitstellen von Berechtigungsnachweisen an den Diensteanbieter (46), so dass es einem Besitzer der Ressource (48) ermöglicht wird, der Ressourcenanforderung eine Genehmigung zu erteilen, wobei die Genehmigung sowohl von der Anwendung als auch vom anfordernden Benutzer (42) abhängig ist;
Senden einer ersten Autorisierungsanfrage, die für die Anwendung um Erlaubnis vom Besitzer der Ressource (48) ersucht, auf die Ressource zuzugreifen, wobei das Verfahren **gekennzeichnet ist durch**:
Empfangen einer bedingten Autorisierung, die der Anwendung Erlaubnis erteilt, auf die Ressource zuzugreifen unter der Bedingung, dass die Zugriffsanforderung im Namen eines Benutzers (42) erfolgt, der in der bedingten Autorisierung definiert ist, und
Senden einer zweiten Zugriffsanforderung von der Anwendung an den Diensteanbieter, um Zugriff auf die Ressource anzufordern, wobei die zweite Zugriffsanforderung Details der bedingten Autorisierung enthält.

2. Verfahren nach Anspruch 1, ferner umfassend Senden einer ersten Zugriffsanforderung von der Anwendung an den Diensteanbieter (46), wobei die erste Zugriffsanforderung Zugriff auf die Ressource beim Diensteanbieter (46) anfordert.

3. Verfahren nach einem der vorstehenden Ansprüche, ferner umfassend Senden einer zweiten Autorisierungsanfrage, die für die Anwendung vom Benutzer (42), der Zugriff auf die Ressource anfordert, um Erlaubnis ersucht, im Namen des Benutzers (42), der Zugriff auf eine Ressource anfordert, Zugriff auf die Ressource anzufordern.

4. Verfahren nach Anspruch 3, ferner umfassend Empfangen einer Benutzerautorisierung, um im Namen des anfordernden Benutzers (42) Zugriff auf den Diensteanbieter (46) anzufordern.

5. Verfahren nach Anspruch 3, wobei die Ressourcenanforderung Details der Benutzerautorisierung zum Anfordern von Zugriff auf den Diensteanbieter (46) im Namen des anfordernden Benutzers (42) enthält.

6. Verfahren, umfassend:
Empfangen einer Ressourcenanforderung von einer Anwendung bei einem Diensteanbieter (46), wobei die Ressourcenanforderung Zugriff auf eine Ressource beim Diensteanbieter (46) anfordert, wobei die Ressourcenanforderung durch die Anwendung im Namen eines anfordernden Benutzers (42) ausgegeben wird;
Empfangen einer ersten Autorisierungsanfrage, die für die Anwendung um Erlaubnis von einem Besitzer der Ressource (48) ersucht, auf die Ressource zuzugreifen, wobei das Verfahren **gekennzeichnet ist durch**:
Beziehen einer bedingten Autorisierung auf die Ressourcenanforderung von einem Besitzer der Ressource (48), wobei die bedingte Autorisierung von der Anwendung und vom anfordernden Benutzer (42) abhängt, und
Empfangen einer zweiten Zugriffsanforderung von der Anwendung bei dem Diensteanbieter (46), wobei die zweite Zugriffsanforderung Zugriff auf die Ressource anfordert und Details der bedingten Autorisierung enthält.

7. Verfahren nach Anspruch 6, ferner umfassend Empfangen einer ersten Zugriffsanforderung von der Anwendung beim Diensteanbieter (46), wobei die erste Zugriffsanforderung Zugriff auf den Diensteanbieter (46) anfordert.

8. Verfahren nach einem der Ansprüche 6 bis 7, ferner umfassend Empfangen einer zweiten Autorisierungsanfrage, die um Autorisierung des Benutzers für die Anwendung ersucht, um Zugriff auf die Ressource im Namen des Benutzers (42), der Zugriff auf die Ressource anfordert, anzufordern.

9. Anwendung, umfassend:
eine erste Ausgabe zum Ausgeben einer Ressourcenanforderung an einen Diensteanbieter (46), wobei die Ressourcenanforderung Zugriff auf eine Ressource beim Diensteanbieter (46) anfordert, wobei die Ressourcenanforderung durch die Anwendung im Namen eines anfordernden Benutzers (42) ausgegeben wird; und
eine zweite Ausgabe zum Bereitstellen von Berechtigungsnachweisen an den Diensteanbieter, so dass es einem Besitzer der Ressource (48) ermöglicht wird, der Ressourcenanforderung eine Genehmigung zu erteilen, wobei die Genehmigung sowohl von der Anwendung als auch vom anfordernden Benutzer (42) abhängig ist,
Mittel zum Senden einer ersten Autorisierungsanfrage, die für die Anwendung um Erlaubnis vom Besitzer der Ressource (48) ersucht, auf die Ressource zuzugreifen, wobei die Anwendung **gekennzeichnet ist durch**:
Mittel zum Empfangen einer bedingten Autorisierung, die der Anwendung Erlaubnis erteilt, auf die Ressource zuzugreifen unter der Bedingung, dass die Zugriffsanforderung im Namen eines Benutzers (42) erfolgt, der in der bedingten Autorisierung definiert ist, und
Mittel zum Senden einer zweiten Zugriffsanforderung von der Anwendung an den Diensteanbieter (46), um Zugriff auf die Ressource anzufordern, wobei die zweite Zugriffsanforderung Details der bedingten Autorisierung enthält.

10. Anwendung, umfassend:
eine erste Eingabe zum Empfangen einer Ressourcenanforderung von einer Anwendung bei einem Diensteanbieter (46), wobei die Ressourcenanforderung Zugriff auf eine Ressource beim Diensteanbieter (46) anfordert, wobei die Ressourcenanforderung durch die Anwendung im Namen eines anfordernden Benutzers (42) ausgegeben wird;
Mittel zum Empfangen einer ersten Autorisierungsanfrage, die für die Anwendung um Erlaubnis von einem Besitzer der Ressource (48) ersucht, auf die Ressource zuzugreifen, wobei die Anwendung **gekennzeichnet ist durch**:
Mittel zum Beziehen einer bedingten Autorisierung auf die Ressourcenanforderung von einem Besitzer der Ressource (48),
wobei die bedingte Autorisierung von der Anwendung und dem anfordernden Benutzer (42) abhängt, und
Mittel zum Empfangen einer zweiten Zugriffsanforderung von der Anwendung beim Diensteanbieter (46), wobei die zweite Zugriffsanforderung Zugriff auf die Ressource anfordert und Details der bedingten Autorisierung enthält.

11. Computerprogrammprodukt, umfassend:
Mittel zum Ausgeben einer Ressourcenanforderung von einer Anwendung an einen Diensteanbieter (46), wobei die Ressourcenanforderung Zugriff auf eine Ressource beim Diensteanbieter (46) anfordert, wobei die Ressourcenanforderung durch die Anwendung im Namen eines anfordernden Benutzers (42) ausgegeben wird; und
Mittel zum Bereitstellen von Berechtigungsnachweisen an den Diensteanbieter (46), so dass es einem Besitzer der Ressource (48) ermöglicht wird, der Ressourcenanforderung eine Genehmigung zu erteilen, wobei die Genehmigung sowohl von der Anwendung als auch vom anfordernden Benutzer (42) abhängig ist,
Mittel zum Senden einer ersten Autorisierungsanfrage, die für die Anwendung um Erlaubnis vom Besitzer der Ressource (48) ersucht, auf die Ressource zuzugreifen, wobei das Computerprogrammprodukt **gekennzeichnet ist durch**:
Mittel zum Empfangen einer bedingten Autorisierung, die der Anwendung Erlaubnis erteilt, auf die Ressource zuzugreifen unter der Bedingung, dass die Zugriffsanforderung im Namen eines Benutzers (42) erfolgt, der in der bedingten Autorisierung definiert ist, und
Mittel zum Senden einer zweiten Zugriffsanforderung von der Anwendung an den Diensteanbieter (46), um Zugriff auf die zweik Ressource anzufordern, wobei die zweite Zugriffsanforderung Details der bedingten Autorisierung enthält.

12. Computerprogrammprodukt, umfassend:
Mittel zum Empfangen einer Ressourcenanforderung von einer Anwendung bei einem Diensteanbieter (46), wobei die Ressourcenanforderung Zugriff auf eine Ressource beim Diensteanbieter (46) anfordert, wobei die Ressourcenanforderung durch die Anwendung im Namen eines anfordernden Benutzers (42) ausgegeben wird;
Mittel zum Empfangen einer ersten Autorisierungsanfrage, die für die Anwendung um Erlaubnis von einem Besitzer der Ressource (48) ersucht, auf die Ressource zuzugreifen, wobei das Computerprogrammprodukt **gekennzeichnet ist durch**:
Mittel zum Beziehen einer bedingten Autorisierung auf die Ressourcenanforderung von einem Besitzer der Ressource (48), wobei die bedingte Autorisierung von der Anwendung und vom anfordernden Benutzer (42) abhängt, und
Mittel zum Empfangen einer zweiten Zugriffsanforderung von der Anwendung bei dem Diensteanbieter (46), wobei die zweite Zugriffsanforderung Zugriff auf die Ressource anfordert und Details der bedingten Autorisierung enthält.

## Revendications

1. Procédé comprenant :
l'émission d'une demande de ressource d'une application à un fournisseur de services (46), la demande de ressource demandant l'accès à une ressource au niveau du fournisseur de services, dans lequel la demande de ressource est émise par l'application au nom d'un utilisateur demandeur (42) ; et
la fourniture de justificatifs au fournisseur de services (46) de façon à ce qu'un propriétaire de la ressource (48) soit apte à accorder son consentement à la demande de ressource, dans lequel le consentement dépend à la fois de l'application et de l'utilisateur demandeur (42) ;
l'envoi d'une première demande d'autorisation demandant la permission du propriétaire de la ressource (48) pour que l'application accède à la ressource, le procédé **caractérisé par** :
la réception d'une autorisation conditionnelle accordant à l'application la permission d'accéder à ladite ressource à condition que la demande d'accès soit faite au nom d'un utilisateur (42) défini dans l'autorisation conditionnelle, et
l'envoi d'une deuxième demande d'accès de l'application au fournisseur de services demandant l'accès à la ressource, la deuxième demande d'accès incluant les détails de l'autorisation conditionnelle.

2. Procédé selon la revendication 1, comprenant en outre l'envoi d'une première demande d'accès de l'application au fournisseur de services (46), la première demande d'accès demandant l'accès à la ressource au niveau du fournisseur de services (46).

3. Procédé selon une quelconque revendication précédente, comprenant en outre l'envoi d'une deuxième demande d'autorisation demandant la permission de l'utilisateur (42) demandant l'accès à la ressource pour que l'application demande l'accès à la ressource au nom de l'utilisateur demandeur (42) de l'accès à une ressource.

4. Procédé selon la revendication 3, comprenant en outre la réception d'une autorisation d'utilisateur pour demander l'accès au fournisseur de services (46) au nom de l'utilisateur demandeur (42).

5. Procédé selon la revendication 3, dans lequel la demande de ressource inclut les détails de ladite autorisation d'utilisateur pour demander l'accès au fournisseur de services (46) au nom de l'utilisateur demandeur (42).

6. Procédé comprenant :
la réception d'une demande de ressource d'une application au niveau d'un fournisseur de services (46), la demande de ressource demandant l'accès à une ressource au niveau du fournisseur de services (46), dans lequel la demande de ressource est émise par l'application au nom d'un utilisateur demandeur (42) ;
la réception d'une première demande d'autorisation demandant la permission d'un propriétaire de la ressource (48) pour que l'application accède à la ressource, le procédé **caractérisé par** :
l'obtention d'une autorisation conditionnelle de la demande de ressource d'un propriétaire de la ressource (48), dans lequel l'autorisation conditionnelle dépend de l'application et de l'utilisateur demandeur (42), et
la réception d'une deuxième demande d'accès de l'application au niveau du fournisseur de services (46), dans lequel la deuxième demande d'accès demande l'accès à la ressource et inclut les détails de l'autorisation conditionnelle.

7. Procédé selon la revendication 6, comprenant en outre la réception d'une première demande d'accès de l'application au niveau du fournisseur de services (46), la première demande d'accès demandant l'accès au fournisseur de services (46).

8. Procédé selon l'une quelconque des revendications 6 à 7, comprenant en outre la réception d'une deuxième demande d'autorisation demandant l'autorisation de l'utilisateur pour que l'application demande l'accès à la ressource au nom de l'utilisateur (42) demandant l'accès à la ressource.

9. Application comprenant :
une première sortie pour émettre une demande de ressource à un fournisseur de services (46), la demande de ressource demandant l'accès à une ressource au niveau du fournisseur de services (46), dans laquelle la demande de ressource est émise par l'application au nom d'un utilisateur demandeur (42) ; et
une deuxième sortie pour fournir des justificatifs au fournisseur de services de façon à ce qu'un propriétaire de la ressource (48) soit apte à accorder son consentement à la demande de ressource, dans laquelle le consentement dépend à la fois de l'application et de l'utilisateur demandeur (42) ;
un moyen pour envoyer une première demande d'autorisation demandant la permission du propriétaire de la ressource (48) pour que l'application accède à la ressource, l'application étant **caractérisée par** :
un moyen pour recevoir une autorisation conditionnelle accordant à l'application la permission d'accéder à ladite ressource à condition que la demande d'accès soit faite au nom d'un utilisateur (42) défini dans l'autorisation conditionnelle, et
un moyen pour envoyer une deuxième demande d'accès de l'application au fournisseur de services (46) demandant l'accès à la ressource, la deuxième demande d'accès incluant les détails de l'autorisation conditionnelle.

10. Application comprenant :
une première entrée pour recevoir une demande de ressource d'une application au niveau d'un fournisseur de services (46), la demande de ressource demandant l'accès à une ressource au niveau du fournisseur de services (46), dans laquelle la demande de ressource est émise par l'application au nom d'un utilisateur demandeur (42) ;
un moyen pour recevoir une première demande d'autorisation demandant la permission d'un propriétaire de la ressource (48) pour que l'application accède à la ressource, l'application étant **caractérisée par** :
un moyen pour obtenir une autorisation conditionnelle de la demande de ressource d'un propriétaire de la ressource (48), dans laquelle l'autorisation conditionnelle dépend de l'application et de l'utilisateur demandeur (42), et
un moyen pour recevoir une deuxième demande d'accès de l'application au niveau du fournisseur de services (46), dans laquelle la deuxième demande d'accès demande l'accès à la ressource et inclut les détails de l'autorisation conditionnelle.

11. Produit de programme informatique comprenant :
un moyen pour émettre une demande de ressource d'une application à un fournisseur de services (46), la demande de ressource demandant l'accès à une ressource au niveau du fournisseur de services (46), dans lequel la demande de ressource est émise par l'application au nom d'un utilisateur demandeur (42) ; et
un moyen pour fournir des justificatifs au fournisseur de services (46) de façon à ce qu'un propriétaire de la ressource (48) soit apte à accorder son consentement à la demande de ressource, dans lequel le consentement dépend à la fois de l'application et de l'utilisateur demandeur (42) ;
un moyen pour envoyer une première demande d'autorisation demandant la permission du propriétaire de la ressource (48) pour que l'application accède à la ressource, le produit de programme informatique étant **caractérisé par** :
un moyen pour recevoir une autorisation conditionnelle donnant à l'application la permission d'accéder à ladite ressource à condition que la demande d'accès soit faite au nom d'un utilisateur (42) défini dans l'autorisation conditionnelle, et
un moyen pour envoyer une deuxième demande d'accès de l'application au fournisseur de services (46) demandant l'accès à la ressource, la deuxième demande d'accès incluant les détails de l'autorisation conditionnelle.

12. Produit de programme informatique comprenant :
un moyen pour recevoir une demande de ressource d'une application au niveau d'un fournisseur de services (46), la demande de ressource demandant l'accès à une ressource au niveau du fournisseur de services (46), dans lequel la demande de ressource est émise par l'application au nom d'un utilisateur demandeur (42) ;
un moyen pour recevoir une première demande d'autorisation demandant la permission d'un propriétaire de la ressource (48) pour que l'application accède à la ressource, le produit de programme informatique étant **caractérisé par** :
un moyen pour obtenir une autorisation conditionnelle de la demande de ressource d'un propriétaire de la ressource (48), dans lequel l'autorisation conditionnelle dépend de l'application et de l'utilisateur demandeur (42), et
un moyen pour recevoir une deuxième demande d'accès de l'application au niveau du fournisseur de services (46), dans lequel la deuxième demande d'accès demande l'accès à la ressource et inclut les détails de l'autorisation conditionnelle.
